# EUROPÄISCHE PATENTSCHRIFT

(11) **EP 3 280 943 B1**
(45) Veröffentlichungstag und Bekanntmachung des Hinweises auf die Patenterteilung: **20.02.2019**
(21) Anmeldenummer: 16717241.0
(22) Anmeldetag: 18.03.2016
(51) Int. Cl.: F16L 55/165

(54) **VORRICHTUNG ZUR VERBINDUNG EINER ANSCHLUSSROHRLEITUNG MIT EINER SANIERTEN ROHRLEITUNG**
DEVICE FOR CONNECTING A CONNECTION PIPELINE TO A REHABILITATED PIPELINE
DISPOSITIF PERMETTANT DE RELIER UNE CONDUITE DE RACCORDEMENT À UNE CONDUITE RÉNOVÉE

(30) Priorität: 10.04.2015 DE 102015105467
(43) Veröffentlichungstag der Anmeldung: 14.02.2018
(73) Patentinhaber: egeplast international GmbH, 48268 Greven (DE)
(72) Erfinder: HESSE, Holger, 48268 Greven (DE)
(74) Vertreter: Fritz, Edmund Lothar
(86) Internationale Anmeldenummer: PCT/DE2016/100128
(87) Internationale Veröffentlichungsnummer: WO 2016/162011

(56) Entgegenhaltungen:
- EP-A2- 0 562 706
- GB-A- 2 218 484
- US-A- 5 634 672

## Beschreibung

Die vorliegende Erfindung betrifft eine Vorrichtung zur Verbindung einer Anschlussrohrleitung mit einer sanierten Rohrleitung, welche eine radial außen liegende Altrohrleitung umfasst sowie ein in die Altrohrleitung eingezogenes Sanierungsrohr aus Kunststoff, wobei zur Verbindung wenigstens ein Flansch aus Stahl vorgesehen ist, welcher endseitig mit der Altrohrleitung verbunden ist, sowie wenigstens ein Schweißfitting vorgesehen ist, welches mit seiner Innenseite außen auf einen Endbereich des Sanierungsrohr aufschweißbar ist, wobei das Sanierungsrohr ein durch Reduzieren seines Außendurchmessers mittels Gesenk in die Altrohrleitung eingezogenes Kunststoffrohr ist, welches im Bereich seines aus der Altrohrleitung axial herausragenden Überstands einen Versprung nach außen im Durchmesser aufweist, im Vergleich zum Durchmesser des Sanierungsrohrs innerhalb der Altrohrleitung und wobei radial außen auf das Sanierungsrohr im Bereich des Überstands ein Kunststoffschweißfitting aufgeschweißt ist, welches über seine gesamte axiale Länge axial vor der Altrohrleitung positioniert ist.

Aus dem Stand der Technik ist es bekannt, undicht gewordene Altrohrleitungen aus Stahl zu sanieren, indem man in diese Sanierungsrohre aus Kunststoff einzieht. Es gibt dabei verschiedene Varianten der Altrohrsanierung. Bei einer Variante des so genannten Relining zieht man ein zum Beispiel zu einem etwa C-förmigen Profil zusammengefaltetes Liner-Rohr in das Altrohr ein und verformt dann das Liner-Rohr durch Wärmeeinfluss, wodurch sich das Liner-Rohr rückverformt und dann an die Innenfläche des zu sanierenden Altrohrs anlegt.

Ein anderes bekanntes Verfahren zur Sanierung von Altrohrleitungen ist das so genannte "swage lining", bei dem man das für die Sanierung verwendete Kunststoffrohr durch ein Gesenk führt und so im Außendurchmesser reduziert. Das so verformte Kunststoffrohr wird dann in das Altrohr eingezogen und verformt sich dabei so, dass es sich eng und ohne Zwischenraum innenseitig an die Altrohrleitung anlegt. Es erfolgt also bei dem Sanierungsrohr auch hier eine Rückverformung, die man dazu nutzen kann, die Altrohrleitung innenseitig auszukleiden. Problematisch ist bei diesem Verfahren, dass das Sanierungsrohr aus Kunststoff außerhalb der Altrohrleitung einen Außendurchmesser annimmt, der weder dem Ausgangsdurchmesser des Sanierungsrohrs noch einem Normdurchmesser entspricht. Die weitere Anbindung einer auf diese Weise sanierten Rohrleitung an einen sich anschließenden Rohrleitungsabschnitt erfolgt nach dem Stand der Technik durch Expansion des Sanierungsrohres auf den nächstgrößeren Normdurchmesser und Anbindung an Normformteile oder Rohre. Dies ist jedoch bislang mit einem recht großen Aufwand verbunden.

In der EP 0 562 706 A2 wird ein Verfahren zum Auskleiden von Rohrleitungen mit einer Innenbeschichtung beschrieben, bei dem das Auskleiden allerdings durch herkömmliches Relining mit einem im Profil verformten Liner erfolgt, der dann durch Wärmeeinfluss expandiert wird. Dieses Verfahren bezieht sich somit nicht auf Sanierungsrohre, die durch swage lining im Außendurchmesser reduziert wurden. Um die mit einem Liner sanierte Altrohrleitung an einen weiteren Rohrleitungsabschnitt anzuschließen wird hier ein Reduktionsstück an das eine Ende der Altrohrleitung angeschweißt. An dem Ende des Reduktionsstücks wird radial außen ein Stahlflansch angeschweißt, welcher Löcher aufweist, so dass man den Flansch über Bolzen mit einem anderen Flansch eines sich anschließenden Rohrleitungsabschnitts verbinden kann. Das innenliegende Sanierungsrohr aus Kunststoff steht ein wenig über das Ende des Reduktionsstücks vor. An dieses Ende wird ein ringförmiges Füllstück aus Polyethylen durch Schmelzschweißen angeschweißt, welches so geformt ist, dass es den radialen Freiraum zwischen dem Reduktionsstück außen und dem Sanierungsrohr innen ausfüllt. An diesem Füllstück aus Kunststoff befindet sich wiederum ein angeformter Flansch, der das Reduktionsstück radial nach außen hin überragt und welcher auch den Stahlflansch teilweise überlappt. Dieser Kunststoffflansch steht axial ein Stück gegenüber dem Stahlflansch vor, liegt aber radial weiter innen als der Stahlflansch, so dass man zwei Rohrleitungsabschnitte gleichen Durchmessers einerseits radial außen über die Stahlflansche mechanisch verbinden kann, wobei dann die Kunststoffflansche der Füllstücke über eine dazwischen liegende Dichtung aneinandergepresst werden. Diese Art der Verbindung ist zum einen sehr aufwändig in der Erstellung und zum anderen hinsichtlich der Dichtigkeit, insbesondere bei unter Druck stehenden Medien in der Rohrleitung problematisch, da die Dichtung beispielsweise einem Verschleiß durch Alterung unterliegt und daher die Gefahr besteht, dass mit der Zeit Undichtigkeiten auftreten.

Die Aufgabe der vorliegenden Erfindung besteht darin, eine Vorrichtung zur Verbindung einer Anschlussrohrleitung mit einer sanierten Rohrleitung mit den Merkmalen der eingangs genannten Gattung zur Verfügung zu stellen, welche eine einfachere Anbindung ermöglicht und zu einer dauerhaft dichten und druckfesten Verbindung führt.

Die Lösung dieser Aufgabe liefert eine Vorrichtung zur Verbindung einer Anschlussrohrleitung mit einer sanierten Rohrleitung der eingangs genannten Gattung mit den Merkmalen des Anspruchs 1.

Erfindungsgemäß ist vorgesehen, dass das Kunststoffschweißfitting eine Innenhülse aus Kunststoff aufweist, die radial außen konzentrisch von einer ringförmigen Armierung umgeben ist, wobei die ringförmige Armierung aus einem hochfesten Kunststoffmaterial und/oder aus einem metallischen Material besteht. Dadurch kann die Druckfestigkeit des Kunststoffschweißfittings erhöht werden.

Die Sanierung der Altrohrleitung mittels des Sanierungsrohrs aus Kunststoff erfolgt durch "swage-lining.

Die vorgenannte Armierung des Kunststoffschweißfittings kann beispielsweise aus einem hochfesten Kunststoffmaterial bestehen, welches vom sonstigen Kunststoff des Schweißfittings in seinen Eigenschaften verschieden sein kann und insbesondere eine höhere mechanische Belastbarkeit, insbesondere Druckfestigkeit aufweist, welches aber beispielsweise aus einem chemisch ähnlichen Kunststoff bestehen kann wie das Grundmaterial des Kunststoffschweißfittings. Alternativ dazu kann die Armierung beispielsweise auch aus einem metallischen Material bestehen. In beiden Fällen empfiehlt es sich, die Armierung so zu dimensionieren, dass die gewünschten Eigenschaften hinsichtlich der mechanischen Festigkeit erreicht werden.

Bevorzugt ist weiterhin im Bereich der Stirnseite des Kunststoffschweißfittings wenigstens ein O-Ring zur Abdichtung angeordnet, so dass eine abgedichtete Anbindung einer erfindungsgemäß sanierten Altrohrleitung an ein bestehendes Rohrleitungssystem erfolgen kann. Dieser O-Ring kann beispielsweise ganz oder teilweise in einer dazu vorgesehenen Ringnut des Kunststoffschweißfittings aufgenommen sein.

Anders als im Stand der Technik ist vorzugsweise an der Altrohrleitung ein Normflansch aus Stahl angebracht, dessen Innendurchmesser mit dem Innendurchmesser der Altrohrleitung übereinstimmt. Auf diese Weise ist es nicht notwendig, ein Reduktionsstück an die Altrohrleitung anzuschweißen, in dessen Bereich sich der Durchmesser der Altrohrleitung erweitert, mit der Folge, dass damit zwei Schweißnähte anfallen und sich der Aufbau der Verbindungsvorrichtung insgesamt kompliziert, wie bei der Vorrichtung, die in der oben erwähnten EP 0 562 706 B1 beschrieben wird.

Gegenstand der vorliegenden Erfindung ist weiterhin ein Verfahren zur Verbindung einer Anschlussrohrleitung mit einer sanierten Rohrleitung unter Verwendung einer Verbindungsvorrichtung der zuvor beschriebenen Art, bei dem vor dem Aufschweißen des Kunststoffschweißfittings auf das Sanierungsrohr letzteres in seinem aus der Altrohrleitung herausragenden Bereich im Durchmesser und/oder in der Länge seines Überstands gegenüber der Altrohrleitung kalibriert wird.

In der Regel werden durch "Relining" überwiegend Altrohrleitungen aus Stahl saniert, so dass man die Möglichkeit hat, an den Rohrenden der Sanierungsstrecke zu Beginn der Sanierung jeweils einen Norm-Flansch zu installieren. Das Sanierungsrohr wird dann durch beide Flansche an den Enden der Altrohrleitung geführt und nachdem es sich an die Innenseite der Altrohrleitung angelegt hat (Erreichen der so genannten "close-fit-Lage") wird das Sanierungsrohr bevorzugt im Außendurchmesser und Überstand kalibriert. Die Kalibrierung des Außendurchmessers sowie des Überstands des Sanierungsrohrs ist empfehlenswert, um eine homogene Schweißung zu gewährleisten. Als Werkzeuge für diese Kalibrierung kann man beispielsweise adaptierte Fräsen verwenden. Das durch Kalibrieren vorbereitete Sanierungsrohr kann insbesondere im Heizwendelschweißverfahren mit dem Schweißfitting verbunden werden. Vorzugsweise weist dazu das Kunststoffschweißfitting im Bereich seiner Innenfläche wenigstens eine Heizwendel auf.

Da der Außenradius des Sanierungsrohres über seinen Umfang von 360 ° nicht zwingend gleich sein muss, erfolgt besonders bevorzugt das Kalibrieren mittels einer Kalibrierfräse, die über eine Innenzentrierung geführt wird, da diese einen zentrischen definierten Durchmesser bewirkt. Über dieselbe Innenzentrierung kann beispielsweise auch der Überstand (das axiale Überstandsmaß mit welchem das Sanierungsrohr über das Altrohr vorsteht) kalibriert werden.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine schematisch vereinfachte Längsschnittdarstellung einer erfindungsgemäßen Vorrichtung zur Verbindung einer Anschlussrohrleitung mit einer sanierten Rohrleitung;
Figur 2 eine vergrößerte schematische Schnittdarstellung eines erfindungsgemäßen Kunststoffschweißfittings.

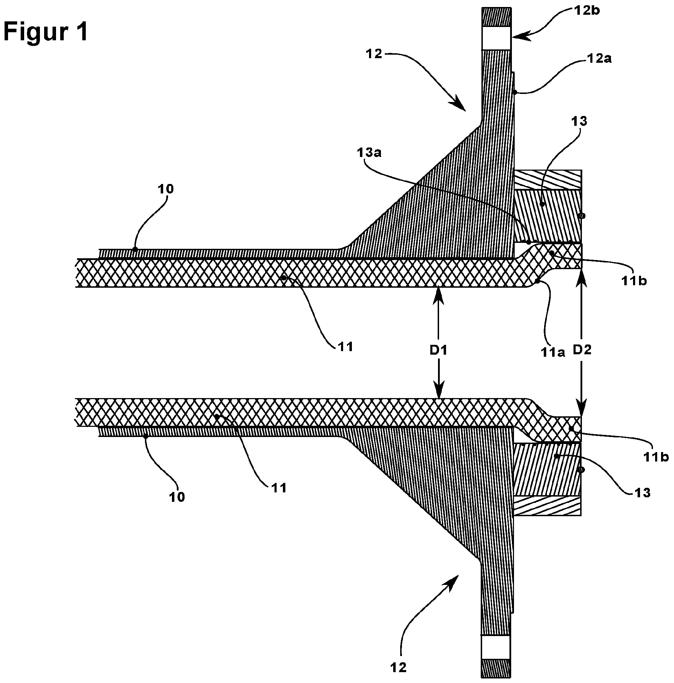

Zunächst wird auf Figur 1 Bezug genommen. Diese zeigt einen schematisch vereinfachten Längsschnitt durch einen Teilabschnitt einer Altrohrleitung 10, in die ein Sanierungsrohr 11 aus Kunststoff eingezogen wurde. Die Sanierung der Altrohrleitung 10 erfolgte im vorliegenden Fall erfindungsgemäß durch das so genannte "swage lining", bei dem ein Kunststoffrohr mit einem spezifischen Außendurchmesser durch ein Gesenk (hier nicht dargestellt) geführt wird, um auf diese Weise denn Durchmesser des Kunststoffrohrs zu reduzierten. Die Verformung des Kunststoffrohrs (beispielsweise ein Rohr aus Polyethylen) bleibt dabei im elastischen Bereich, so dass sich das Sanierungsrohr 11 nach seinem Einzug eng ohne Zwischenraum an die Innenfläche der Altrohrleitung anlegt. Wie man jedoch in Figur 1 erkennen kann, dehnt sich jedoch das Sanierungsrohr 11 außerhalb der Altrohrleitung 10 radial teilweise aus, so dass es einen Durchmesser annimmt, der weder seinem Ausgangsdurchmesser noch einem Normdurchmesser entspricht. Es gibt also im Sanierungsrohr 11 im Bereich seines Überstands aus der Altrohrleitung ausgehend von dem reduzierten Durchmesser D₁ einen radialen Versprung 11 a nach außen und es schließt sich an diesen Versprung 11 a der Überstand 11 b des Sanierungsrohrs an, in dessen Bereich dieses einen größeren Durchmesser D₂ aufweist.

In Figur 1 ist weiterhin erkennbar, dass an die Altrohrleitung 10 im endseitigen Bereich ein Normflansch 12 angeschweißt wurde, wobei jedoch die geometrischen Verhältnisse derart sind, dass der Innendurchmesser der Altrohrleitung 10 durchweg gleichbleiben ist, d.h. also auch in dem Bereich, in dem sich endseitig der Normflansch 12 befindet, welcher von der Altrohrleitung 10 aus radial nach außen hin ragt und welcher stirnseitig eine Flanschfläche 12 a definiert. Der Innendurchmesser der Altrohrleitung 10 ist also in dem Bereich axial vor dem Flansch 12 und im endseitigen Bereich mit Flansch gleichbleibend und entspricht dem Außendurchmesser des Sanierungsrohrs 11, welches ja "close fit" in die Altrohrleitung 10 eingezogen ist. Der Normflansch 12 hat weiterhin in seinem radial äußeren Bereich achsparallele Bohrungen 12 b, welche hier nicht dargestellte Schrauben aufnehmen können, mittels derer eine mechanische Verbindung zu einer Anschlussrohrleitung hergestellt werden kann.

Wie sich weiterhin aus Figur 1 ergibt, gehört zu der erfindungsgemäßen Vorrichtung zur Verbindung neben dem Normflansch 12, der in der Regel aus Stahl besteht, weiterhin ein Kunststoffschweißfitting 13, welches mit dem ebenfalls aus Kunststoff bestehenden Sanierungsrohr 11 verbunden wird. Dieses Kunststoffschweißfitting 13 wird so angeordnet, dass es sich im radial inneren Bereich des Normflansches 12 befindet und in axialer Verlängerung an dessen Flanschfläche 12 a anschließt. Mit seiner ringförmigen Innenfläche 13 a sitzt das Kunststoffschweißfitting auf dem im Durchmesser erweiterten Bereich 11 b des Sanierungsrohrs 11 auf, dort wo dieses seinen aus der Altrohrleitung 10 herausragenden Überstand hat. Diese ringförmige Innenfläche 13 a des Kunststoffschweißfittings 13 wird mit der ringförmigen Außenfläche des Überstands 11 b des Sanierungsrohrs 11 verschweißt. Dazu weist das Kunststoffschweißfitting 13 im Bereich seiner Innenfläche 13 a Heizwendeln 13 b auf, die sich bei hindurchfließen eines elektrischen Stroms erwärmen, und so den Kunststoff im Grenzbereich zwischen Kunststoffschweißfitting und Sanierungsrohr anschmelzen, wodurch ein elektrisches Verschweißen zur Herstellung einer stoffschlüssigen Verbindung zwischen Kunststoffschweißfitting und dem Überstand des Sanierungsrohrs 11 erfolgen kann.

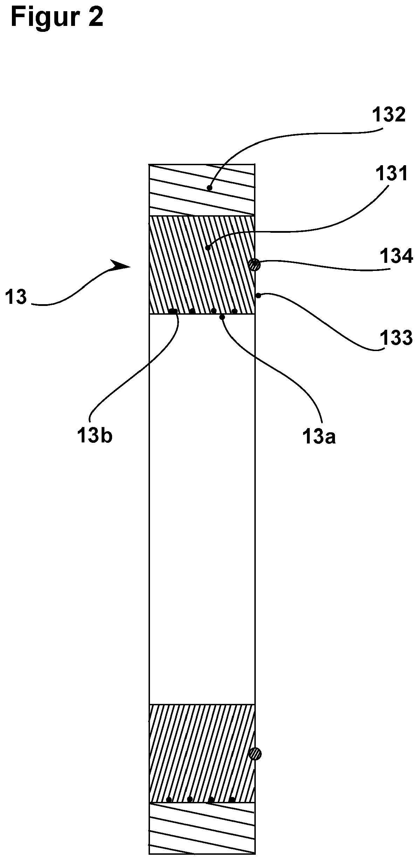

Figur 2 zeigt eine vergrößerte Darstellung des Kunststoffschweißfittings 13. Dieses hat wie man sieht die Form einer ringförmigen Hülse mit im Prinzip außen und innen jeweils etwa zylindrischen Flächen. Dabei ist das Kunststoffschweißfitting zweischichtig ausgebildet mit einer radial innen liegenden Innenhülse 131 aus Kunststoff, auf die eine diese Innenhülse 131 konzentrisch umgebende ebenfalls hülsenförmige Armierung 132 aufgebracht ist. Diese Armierung 132 kann beispielsweise aus einer definierten Schichtdicke aus hochfestem Kunststoffmaterial bestehen, welches die Lasten, die aus dem inneren Überdruck des Systems resultieren, sicher aufnimmt. Alternativ ist es auch möglich, diese Armierung beispielsweise aus einem metallischen Material zu fertigen, welches ebenfalls entsprechend dem Anwendungszweck ausreichend zu dimensionieren ist. In der Stirnfläche 133 der Innenhülse 131 ist ein O-Ring 134 zur stirnseitigen Abdichtung gegenüber einer Anschlussrohrleitung angeordnet. Für die Aufnahme dieses O-Rings 134 kann eine Nut in der Stirnfläche 133 vorgesehen sein. Die Innenhülse 131 des Kunststoffschweißfittings 13 besteht in der Regel aus dem gleichen Kunststoff wie das Sanierungsrohr 11 , so dass das auf den Überstand 11 b des Sanierungsrohrs 11 aufgeschobene Kunststoffschweißfitting 13 mit dem Sanierungsrohr verschweißt werden kann. Bevor dieser Schweißvorgang erfolgt, ist erfindungsgemäß eine Kalibrierung des Außendurchmessers des aus der Altrohrleitung 10 vorstehenden Teils des Sanierungsrohrs 11 vorgesehen, um so eine homogene Schweißung mit dem Kunststoffschweißfitting zu ermöglichen.

### Bezugszeichenliste

- 10: Altrohrleitung
- 11: Sanierungsrohr
- 11 a: radialer Versprung
- 11 b: Überstand
- 12: Normflansch
- 12 a: Flanschfläche
- 12 b: achsparallele Bohrungen
- 13: Kunststoffschweißfitting
- 13 a: Innenfläche
- 13 b: Heizwendeln
- 131: Innenhülse
- 132: Armierung
- 133: Stirnfläche
- 134: O-Ring Dichtung

## Patentansprüche

1. Vorrichtung zur Verbindung einer Anschlussrohrleitung mit einer sanierten Rohrleitung, welche eine radial außen liegende Altrohrleitung (10) umfasst sowie ein in die Altrohrleitung (10) eingezogenes Sanierungsrohr (11) aus Kunststoff, wobei zur Verbindung wenigstens ein Flansch (12) aus Stahl vorgesehen ist, welcher endseitig mit der Altrohrleitung (10) verbunden ist, sowie wenigstens ein Kunststoffschweißfitting (13) vorgesehen ist, welches mit seiner Innenseite außen auf einen Endbereich des Sanierungsrohrs (11) aufschweißbar ist, wobei das Sanierungsrohr (11) ein durch Reduzieren seines Außendurchmessers mittels Gesenk in die Altrohrleitung (10) eingezogenes Kunststoffrohr ist, welches im Bereich seines aus der Altrohrleitung (11) axial herausragenden Überstands (11b) einen Versprung (11 a) nach außen im Durchmesser aufweist, im Vergleich zum Durchmesser des Sanierungsrohrs (11) innerhalb der Altrohrleitung (10) und wobei radial außen auf das Sanierungsrohr (11) im Bereich des Überstands (11 b) das Kunststoffschweißfitting (13) aufgeschweißt ist, welches über seine gesamte axiale Länge axial vor der Altrohrleitung (10) positioniert ist, **dadurch gekennzeichnet, dass** das Kunststoffschweißfitting (13) eine Innenhülse (131) aus Kunststoff aufweist, die radial außen konzentrisch von einer ringförmigen Armierung (132) umgeben ist, wobei die ringförmige Armierung (132) aus einem hochfesten Kunststoffmaterial und/oder aus einem metallischen Material besteht.

2. Vorrichtung nach Anspruch 1, **dadurch gekennzeichnet, dass** das Kunststoffschweißfitting (13) im Bereich seiner Innenfläche (13 a) wenigstens eine Heizwendel (13 b) aufweist.

3. Vorrichtung nach einem der Ansprüche 1 oder 2, **dadurch gekennzeichnet, dass** im Bereich der Stirnseite (133) des Kunststoffschweißfittings (13) wenigstens ein O-Ring (134) zur Abdichtung angeordnet ist.

4. Vorrichtung nach einem der Ansprüche 1 bis 3, **dadurch gekennzeichnet, dass** an der Altrohrleitung (10) ein Normflansch (12) aus Stahl angebracht ist, dessen Innendurchmesser mit dem Innendurchmesser der Altrohrleitung (10) übereinstimmt.

5. Vorrichtung nach einem der Ansprüche 1 bis 4, **dadurch gekennzeichnet, dass** das Sanierungsrohr (11) in seinem aus der Altrohrleitung (10) herausragenden Bereich in seinem Außendurchmesser und/oder in der Länge seines Überstands gegenüber der Altrohrleitung kalibiert ist.

6. Verfahren zur Verbindung einer Anschlussrohrleitung mit einer sanierten Rohrleitung unter Verwendung einer Vorrichtung nach einem der Ansprüche 1 bis 5, wobei vor dem Aufschweißen des Kunststoffschweißfittings (13) auf das Sanierungsrohr (11) letzteres in seinem aus der Altrohrleitung (10) herausragenden Bereich im Durchmesser und/oder in der Länge seines Überstands gegenüber der Altrohrleitung kalibriert wird, **dadurch gekennzeichnet, dass** das Kalibrieren mittels Fräsen erfolgt.

7. Verfahren nach Anspruch 6, **dadurch gekennzeichnet, dass** das Kalibrieren mittels einer Kalibrierfräse erfolgt, die über eine Innenzentrierung geführt wird.

## Claims

1. Device for connecting a connecting pipeline with a refurbished pipeline, comprising a radially outer old pipeline (10) and a relining pipe (11) made of plastic which is drawn into the old pipe (10), wherein at least one flange (12) made of steel is provided for the connection and is connected to one end of the old pipeline (10), and at least one plastic weld fitting (13) is provided, the inner side of which can be welded to an end region of the relining pipe (11), wherein the relining pipe (11) is a plastic pipe which is drawn into the old pipeline (10) by reduction of its outer diameter by means of a swage, and which has an outward enlargement (11a) of diameter in the region (11b) thereof which protrudes axially from the old pipeline (11) compared with the diameter of the relining pipeline (11) inside the old pipeline (10), and wherein the entire length of plastic weld fitting (13) which is positioned axially before the old pipeline (10) is welded radially outwardly onto the relining pipe (11) in the region (11b) of the protrusion, **characterized in that** the plastic weld fitting (13) includes an inner sleeve (131) made of plastic which is surrounded radially outwardly and concentrically by an annular sheath (132), wherein the annular sheath (132) consists of a high strength plastic material and/or a metallic material.

2. Device according to claim 1, **characterized in that** the plastic weld fitting (13) has at least one heating coil (13b) in the region of its inner surface (13a).

3. Device according to Claim 1 or 2, **characterized in that** at least one O-ring (134) is arranged in the region of the frontal face (133) of the plastic weld fitting (13) to form a seal.

4. Device according to any one of Claims 1 to 3, **characterized in that** a standard flange (12) made of steel whose internal diameter corresponds to the internal diameter of the old pipeline (10) is mounted on the old pipeline (10).

5. Device according to any one of Claims 1 to 4, **characterized in that** the region of the relining pipe (11) which protrudes from the old pipeline (10) is calibrated with the old pipeline in terms of its external diameter and/or the length of its protrusion therefrom.

6. Method for connecting a connecting pipeline with a refurbished pipeline using a device according to any one of Claims 1 to 5, wherein the region of the relining pipe protruding from the old pipeline (10) is calibrated with the old pipeline in terms of its diameter and/or the length of its protrusion therefrom before the plastic weld fitting (13) is welded onto the relining pipe (11), **characterized in that** the calibration is carried out by milling.

7. Method according to Claim 6, **characterized in that** the calibration is performed with the aid of a calibrating mill which is guided by means of an internal alignment device.

## Revendications

1. Dispositif, destiné à assembler une tuyauterie de raccordement sur une tuyauterie rénovée, laquelle comporte une tuyauterie ancienne (10) située à l'extérieur en direction radiale, ainsi qu'un tuyau de rénovation (11) en matière plastique, tiré dans la tuyauterie ancienne (10), pour l'assemblage étant prévue au moins une bride (12) en acier, qui sur le côté extrême est assemblé avec la tuyauterie ancienne (10), ainsi qu'au moins un raccord à souder en matière plastique (13) étant prévu, qui par sa face interne est soudable à l'extérieur sur une zone d'extrémité du tuyau de rénovation (11), le tuyau de rénovation (11) étant un tuyau en matière plastique, tiré dans la tuyauterie ancienne (10) par réduction de son diamètre extérieur par matriçage, lequel dans la zone de son débordement (11b), saillant en direction axiale hors de la tuyauterie ancienne (11) comporte une déviation (11 a) vers l'extérieur du diamètre en comparaison du diamètre de tuyau de rénovation (11) à l'intérieur de la tuyauterie ancienne (10) et en direction radiale vers l'extérieur, sur le tuyau de rénovation (11), dans la zone du débordement (11 b) étant soudé le raccord à souder en matière plastique (13), qui sur l'ensemble de sa longueur axiale est positionné en direction axiale à l'avant de la tuyauterie ancienne (10), **caractérisé en ce que** le raccord à souder en matière plastique (13) comporte une douille intérieure (131) en matière plastique, qui en direction radiale sur l'extérieur est entourée de manière concentrique par une armature (132) de forme annulaire, l'armature (132) de forme annulaire étant constituée d'une matière plastique ultrasolide et/ou d'une matière métallique.

2. Dispositif selon la revendication 1, **caractérisé en ce que** dans la zone de sa surface intérieure (13 a), le raccord à souder en matière plastique (13) comporte au moins un serpentin chauffant (13 b).

3. Dispositif selon l'une quelconque des revendications 1 ou 2, **caractérisé en ce que** dans la zone de la face frontale (133) du raccord à souder en matière plastique (13) est placé au moins un joint torique (134) destiné à assurer l'étanchéité.

4. Dispositif selon l'une quelconque des revendications 1 à 3, **caractérisé en ce que** sur la tuyauterie ancienne (10) est montée une bride normalisée (12) en acier, dont le diamètre intérieur correspond au diamètre intérieur de la tuyauterie ancienne (10).

5. Dispositif selon l'une quelconque des revendications 1 à 4, **caractérisé en ce que** dans sa zone saillant hors de la tuyauterie ancienne (10), et/ou dans la longueur de son débordement, le tuyau de rénovation (11) est calibré dans son diamètre extérieur par rapport à la tuyauterie ancienne.

6. Procédé destiné à assembler une tuyauterie de raccordement avec une tuyauterie rénovée en utilisant un dispositif selon l'une quelconque des revendications 1 à 5, lors duquel, avant le soudage du raccord à souder en matière plastique (13) sur le tuyau de rénovation (11), dans sa zone saillant hors de la tuyauterie ancienne (10), on calibre celui-ci dans le diamètre et/ou dans la longueur de son débordement par rapport à la tuyauterie ancienne, **caractérisé en ce que** le calibrage s'effectue par fraisage.

7. Procédé selon la revendication 6, **caractérisé en ce que** le calibrage s'effectue à l'aide d'une fraise de calibrage qui est guidée via un centrage intérieur.
